# EUROPÄISCHE PATENTSCHRIFT

(11) **EP 1 901 920 B1**
(45) Veröffentlichungstag und Bekanntmachung des Hinweises auf die Patenterteilung: **04.05.2016**
(21) Anmeldenummer: 06849375.8
(22) Anmeldetag: 13.06.2006
(51) Int. Cl.: B32B 27/18, B32B 27/32, B32B 27/34, B32B 15/08, B32B 15/085, B32B 15/088, B65D 81/26, B65D 75/36, A61J 1/03

(54) **BLISTERBODENTEIL UND BLISTERPACKUNG**
BLISTER BASE PART AND BLISTER PACK
ÉLÉMENT DE BASE DE BLISTER ET EMBALLAGE BLISTER

(30) Priorität: 15.06.2005 EP 05405383
(43) Veröffentlichungstag der Anmeldung: 26.03.2008
(73) Patentinhaber: Amcor Flexibles Kreuzlingen Ltd., 8280 Kreuzlingen (CH)
(72) Erfinder: NÄGELI, Hans, R., CH-8212 Neuhausen (CH); HOMBACH, Franz, P., CH-8222 Beringen (CH); PASBRIG, Erwin, 78224 Singen (DE); BRANDL, Oliver, 78462 Konstanz (DE); SCHWARZ, Thomas, 78244 Gottmadingen (DE)
(74) Vertreter: Gernet, Samuel Andreas
(86) Internationale Anmeldenummer: PCT/EP2006/005635
(87) Internationale Veröffentlichungsnummer: WO 2007/104344

(56) Entgegenhaltungen:
- EP-A- 1 005 977
- EP-A- 1 488 921
- WO-A-2004/080808
- US-A1- 2003 235 664

## Beschreibung

Die Erfindung betrifft ein Blisterbodenteil gemäss dem Oberbegriff von Anspruch 1. Weiter betrifft die Erfindung eine Blisterpackung mit einem erfindungsgemässen Blisterbodenteil und einer gegen die innenschicht des Blisterbodenteils gesiegeiten Deckfolie mit einer Sperrschicht als Barriere gegen Wasserdampf und Gase und einer auf einer ersten Seite der Sperrschicht angeordneten siegelfähigen Innenschicht,

Es ist allgemein bekannt, gegen Feuchtigkeit und Sauerstoff empfindliche Produkte durch Verpacken in Kunststoffmaterialien vor schädlichen atmosphärischen Einflüssen zu schützen. Feuchteempfindliche Produkte können beispielsweise mit einem für Wassermoleküle praktisch undurchlässigen Kunststofffilm umhüllt werden. Als Barriere gegen den Durchtritt von Feuchtigkeit kann z.B. ein Film aus einem Polyethylen hoher Dichte (HDPE) oder aus einem Polyvinylidenchlorid-Methylacrylat-Copolymer (PVDC-MA) verwendet werden. Filme aus orientiertem Polypropylen (oPP), gegebenenfalls metallisiert, oder metallisierte Polyesterfilme, dienen ebenfalls als Barrierematerial gegen Feuchtigkeitsdurchtritt. Weiter sind Metallfolien als Barrierematerial gegen den Durchtritt von Feuchtigkeit und/oder Sauerstoff bekannt und werden oft im Verbund mit Kunststofffilmen eingesetzt. Eine gute Barrierewirkung gegen Wasserdampf und Gase kann auch mit einer Schicht aus Ethylen-Vinylalkohol-Copolymer (EVOH) erreicht werden.

Obschon heute Laminate mit Barriereschichten mit hoher Durchtrittssperrwirkung gegen Feuchtigkeit und Sauerstoff bekannt sind, kann der Durchtritt von Feuchtigkeit gerade bei gesiegelten Verpackungen nicht vollständig verhindert werden, da die Kanten der Laminaten durch die Barriereschicht nicht geschützt sind. Über diese ungeschützten Kanten im Bereich von Siegelungen kann Feuchtigkeit und Sauerstoff in das innere heissgesiegelter Verpackungen eindringen und die Qualität feuchteempfindlicher Produkte beeinträchtigen.

Aus WO-A-2004/000541 und WO-A-2004/080808 sind mehrschichtige Filme mit einer Barriereschicht und mit einer Feuchte absorbierendes Material enthaltenden Siegeischicht bekannt. Die Filme dienen zur Verpackung feuchteempfindlicher Gegenstände, wie z.B. Diagnostik-Teststreifen, und werden entweder nach Faltung gegen sich selbst oder gegen einen zweiten Film heissgesiegelt. Als Feuchte absorbierendes Material mit starker Wasserbindung wird bevorzugt Kalziumoxid (CaO) eingesetzt.

Der Erfindung liegt die Aufgabe zugrunde, ein zur Herstellung von Blisterpackungen zur Verpackung von gegen Feuchte, Sauerstoff und Säure empfindlichen Produkten geeignetes Blisterbodenteil sowie eine Blisterpackungen der eingangs genannten Art zu schaffen, welche gegenüber Blisterbodenteilen bzw. Blisterpackungen nach dem Stand der Technik eine höhere Schutzwirkung gegen den Durchtritt von Feuchtigkeit, Sauerstoff und Säure aufweisen.

Zur erfindungsgemässen Lösung der Aufgabe führt ein Blisterbodenteil mit den Merkmalen von Anspruch 1.

Das erfindungsgemäss eingesetzte Laminat kann auf allen Abpackanlagen mit Kaltumformstationen eingesetzt werden und eignet sich für eine Vielzahl von feuchteempfindlichen Produkten, deren Haltbarkeit durch die spezielle Anordnung eines Feuchteabsorbers wesentlich erhöht werden kann.

Die Erfindung macht sich die an Verpackungsfollen und daraus hergestellten Verpackungen gemäss WO-A-2004/000541 und WO-A-2004/080808 gewonnenen Erkenntnisse zunutze.

Die Innenschicht besteht bevorzugt aus Polyolefin und enthält wenigstens ein Oxid aus der Gruppe der Alkali- und Erdalkalimetalle als Absorbermaterial. Besonders bevorzugt ist Kalziumoxid (CaO) als Absorbermaterial. Neben seiner Eigenschaft als Wasser bindendes Reagens bietet CaO den zusätzlichen Vorteil, dass Säurebildner, wie z.B. Chlorionen oder organische Säuren, die von Produkten abgespalten werden, als Gase oder als durch Reaktion mit Wasser gebildet Säure mit dem CaO zum Salz reagieren und somit gebunden werden. Zudem hat sich gezeigt, dass CaO auch Sauerstoff zu absorbieren vermag, also die Eigenschaften eines Oxygen Scavangers aufweist.

Der bevorzugte Gehalt des Polyolefins der Innenschicht beträgt 0,5 bis 50 Gew.-% CaO, insbesondere 10 bis 30 Gew.-% CaO.

Das Polyolefin der Innenschicht besteht bevorzugt aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP). Es können auch Bestandteile säuremodifizierter Polyolefine, wie lonomere, z.B. Surlyn^{®}, EAA oder PP-MSA enthalten sein. Diese säuremodifizierten Polyolefine wirken als Haftvermittler, so dass in gewissen Fällen auf einen separaten Primer verzichtet werden kann.

Das Polyolefin der Innenschicht besteht aus mehreren Schichten.

Das Bodenteil ist ein Laminat, bei dem das Polyolefin der Innenschicht aus mehreren Schichten besteht, wobei die äusserste, von der Aluminiumfolie am weitesten entfernte Schicht im Wesentlichen kein Absorbermaterial enthält. Mit dieser Massnahme wird eine glatte Oberfläche erzeugt, so dass der Reibungskoeffizient des erfindungsgemässen Laminates dem herkömmlicher Laminate entspricht. Durch das Fehlen der Zusatzstoffe wie CaO in der äussersten Schicht ergibt sich im Vergleich zu herkömmlichen Laminaten bei der Verarbeitung auch keine Abrasion an Formstempeln oder anderen Maschinenkomponenten.

Da Absorptionsmittel wie CaO mit der Feuchte basisch reagieren, verhindert die zusatzstofffreie äusserste Schicht auch, dass eine Änderung des pH-Werts das Füllgut negativ in der Stabilität beeinflussen kann

Besonders bevorzugt ist ein Bodenteil aus einem Laminat, bei dem das Polyolefin der Innenschicht eine Coextrusionsschicht aus mehreren Schichten ist, wobei die äusserste, von der Aluminiumfolie am weitesten entfernte Schicht im Wesentlichen kein Absorbermaterial enthält.

Beim Laminat des erfindungsgemässen Bodenteils ist die Sperrschicht eine Aluminiumfolie und auf der dem Polyolefin zugewandten Seite bevorzugt mit einem Haftvermittler, insbesondere mit einem wasser- oder lösemittelbasierten Primer, oder mit einem polymeren Haftvermittler beschichtet.

Die innerste, der Sperrschicht am nächsten liegende Schicht der Innenschicht enthält im Wesentlichen kein Absorbermaterial. Damit können die Partikel des Absorbermaterials beim unter Druck ausgeführten Kaltformschritt nicht in die als Sperrschicht verwendete Aluminiumfolie eindrücken. Die Partikel können mit dieser Massnahme keine potentiellen Schwachstellen in der Aluminiumfolie erzeugen und damit auch die porenfreie Verformbarkeit nicht reduzieren.

Die Aussenschicht ist bevorzugt ein mit der Aluminiumfolie über eine Klebstoffschicht verbundener Kunststofffilm aus orientiertem Polyamid (oPA), orientiertem Polypropylen (oPP) oder orientiertem Polyester.

Zur erfindungsgemässen Lösung der Aufgabe führt bezüglich der Blisterpackung eine gegen die Innenseite des Blisterbodenteils gesiegelte Deckfolie mit einer Sperrschicht als Barriere gegen Wasserdampf und Gase und einer auf einer ersten Seite der Sperrschicht angeordneten siegelfähigen Innenschicht.

Das Polyolefin der Innenschicht der Deckfolie besteht bevorzugt aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP) und/oder enthält Bestandteile säuremodifizierter Polyolefine, wie lonomere, EAA oder PP-MSA.

Das Polyolefin der Innenschicht der Deckfolie besteht bevorzugt aus einer einzigen Schicht. Die siegelfähige Innenschicht umfasst ein Siegelmedium in der Form eines Lackes, insbesondere eines Heisssiegellackes, einer Folie oder einer siegelfähigen Beschichtung und dient zur Slegelung der Deckfolle gegen die Innenseite des Blisterbodenteils, wobei die Siegelung eine Festversiegelung oder eine Siegelung mit geringerer Haftkraft zur Bildung einer peelbaren Öffnung sein kann.

Die Sperrschicht der Deckfolie ist bevorzugt eine Aluminiumfolie.

Zur Herstellung einer Blisterpackung zur Verpackung von gegen Feuchte, Sauerstoff und Säure empfindlichen Produkten wird aus dem erfindungsgemässen Laminat zunächst durch Kaltverformung ein Blisterbodentell gefertigt. Nach dem Befüllen des Blisterbodenteils wird anschliessend eine Deckfolie, die eine Sperrschicht als Barriere gegen Wasserdampf und Gase umfasst, gegen die Innenschicht des Laminates auf das Blisterbodenteil gesiegelt.

Die erfindungsgemässe Blisterpackung wird bevorzugt verwendet zum Verpacken von pharmazeutischen Produkten wie feuchteempfindlichen Tabletten und Pulvern.

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt schematisch in
- - Fig. 1: den Schichtaufbau eines kaltverformbaren Laminates für die Herstellung von Blisterbodenteilen gemäss Fig. 5, entsprechend der Schnittlinie II-II von Fig. 5;
- - Fig. 2: den Schichtaufbau einer durchdrückbaren Deckfolie für Blisterbodenteile gemäss Fig. 5, entsprechend der Schnittlinie III-III von Fig. 5;
- - Flg. 3: den Schichtaufbau einer peelbaren Deckfolie für Blisterbodenteile;
- - Fig. 4: die Draufsicht auf ein aus dem Laminat von Fig. 1 kaltgeformtes Blisterbodenteil;
- - Flg. 5: den Schnitt durch das Blisterbodenteil von Fig. 4 nach deren Linie I-I;
- - Fig. 6: das Blisterbodenteil von Fig. 5 mit aufgesiegelter Durchdrückfolie von Fig. 2 bzw. einer peelbaren Deckfolie von Fig. 3.

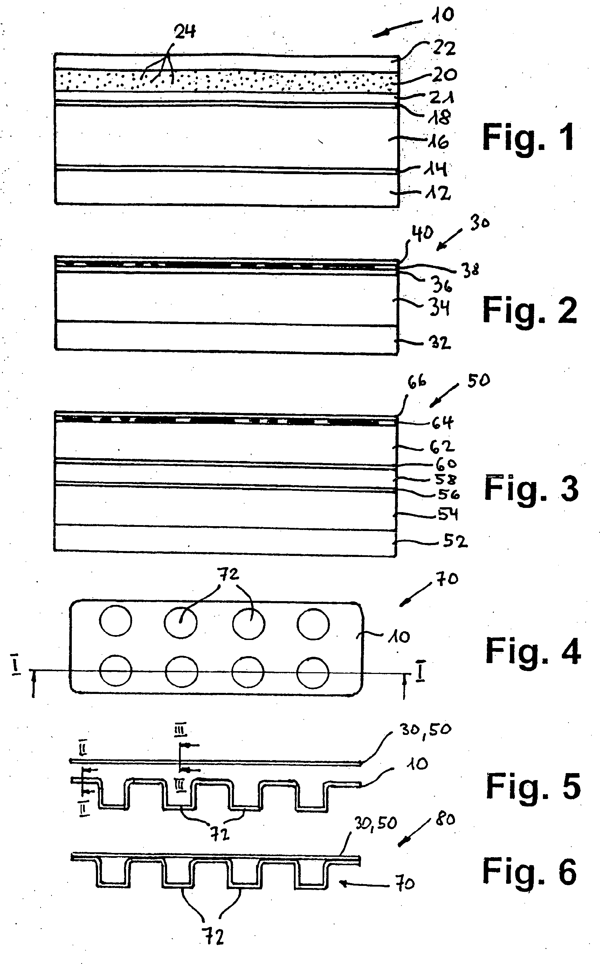

Ein kaltverformbares Laminat 10 für die Herstellung von Blisterbodenteilen zur Verpackung von feuchteempfindlichen Produkten weist gemäss Fig. 1 den folgenden Schichtaufbau auf:
- 12: Film aus orientiertem Polyamid (oPA), 25 µm
- 14: Klebstoffschicht
- 16: Aluminiumfolie, 45 µm
- 18: Haftvermittier (EAA),
- 21: erste Schicht aus Polyethylen hoher Dichte (HDPE), 7µm
- 20: zweite Schicht aus Polyethylen (PE), 45µm, mit
- 24: 30% CaO-Partikeln als Absorber von Feuchte, Sauerstoff und Säure
- 22: dritte Schicht aus Polyethylen hoher Dichte (HDPE), 7µm

Der oPA-Film 12 bildet die spätere Aussenseite eines aus dem Laminat 10 hergestellten Blisterbodenteils, die PE-Schichten 20, 21, 22 bilden als Siegelschicht die innenseite.

Eine als Durchdrückfolie ausgestaltete Deckfolie 30 für einen aus dem Laminat 10 hergestellten Blisterbodenteil weist gemäss Fig. 2 den folgenden Schichtaufbau auf:
- 32: Heisssiegellack oder Siegelbeschichtung
- 34: Aluminiumfolie
- 36: Druckvorlack
- 38: Bedruckung
- 40: Drucküberlack

Die Bedruckung 38 mit dem Drucküberlack bildet die spätere Aussenseite der Deckfolie 30, der Heisssiegeilack bzw. die Siegelbeschichtung 32 dient der Siegelung der Deckfolie 30 gegen die Siegelschicht 22 eines aus dem Laminat 10 hergestellten Blisterbodenteils.

Eine als peelbare Folie ausgestaltete Deckfolie 50 für ein aus dem Laminat 10 hergestelltes Blisterbodenteil weist gemäss Fig. 3 den folgenden Schichtaufbau auf:
- 52: Heisssiegellack oder Siegelbeschichtung
- 54: Aluminiumfolie
- 56: Klebstoffschicht
- 58: Film aus Polyethylenterephthalat (PET)
- 60: Klebstoffschicht
- 62: Papier
- 64: Bedruckung
- 66: Drucküberlack

Die Bedruckung 64 mit dem Drucküberlack 66 bildet die spätere Aussenseite der peelbaren Deckfolie 50, der Heisssiegellack bzw. die Siegeibeschichtung 52 dient der Siegelung der Deckfolie 50 gegen die PE-Schicht 22 eines aus dem Laminat 10 hergestellten Blisterbodenteils.

Ein in Fig. 4 gezeigtes Blisterbodenteil 70 wird aus dem Laminat 10 hergesteilt, wobei die aus dem Laminat 10 herausgeformten Näpfe 72 zu Aufnahme von beispielsweise Tabletten durch Kaltverformung, wie z.B. durch Tiefziehen mittels Stempel und Matrize, aus dem Laminat 10 herausgeformt sind.

Wie in den Fig. 5 und 6 dargestellt, wird nach dem Befüllen der Näpfe 72 zur Bildung einer Blisterpackung 80 je nach Bedarf eine durchdrückbare Deckfolie 30 oder eine peelbare Deckfolie 50 auf das Blisterbodenteil 70 aufgesiegelt.

## Patentansprüche

1. Blisterbodenteil (70) aus einem Laminat (10) mit aus diesem durch Kaltverformen herausgeformten Näpfen (72) für die Herstellung einer Blisterpackung (80) zur Verpackung von gegen Feuchte, Sauerstoff und Säure empfindlichen Produkten, mit einer Aluminiumfolie als Sperrschicht (16) als Barriere gegen Wasserdampf und Gase, einer auf einer ersten Seite der Sperrschicht (16) angeordneten Kunststoffschicht (12) als Aussenschicht und einer auf der zweiten Seite der Sperrschicht (16) angeordneten siegelfähigen Innenschicht (20, 21, 22), wobei auf der zweiten Seite der Sperrschicht (16) ein Feuchte, Sauerstoff und Säure absorbierendes Absorbermaterial (24) enthaltend wenigstens ein Oxid aus der Gruppe der Alkali- und Erdalkalimetalle angeordnet ist,
**dadurch gekennzeichnet, dass**
die auf der zweiten Seite der Sperrschicht (16) angeordnete Innenschicht (20, 21, 22) Polyolefin enthält und aus mehreren Schichten besteht, wobei die äusserste, von der Aluminiumfolie am weitesten entfernte Schicht (22) und die innerste, der Aluminiumfolie am nächsten liegende Schicht (21) kein Absorbermaterial (24) enthält.

2. Blisterbodenteil (70) nach Anspruch 1, **dadurch gekennzeichnet, dass** das Absorbermaterial (24) Kalziumoxid (CaO) ist.

3. Blisterbodenteil (70) nach Anspruch 2, **dadurch gekennzeichnet, dass** die das Absorbermaterial (24) enthaltende Schicht 0,5 bis 50 Gew.-% CaO, vorzugsweise 10 bis 30 Gew.-% CaO, enthält.

4. Blisterbodenteil (70) nach Anspruch 1, **dadurch gekennzeichnet, dass** das Polyolefin der Innenschicht (20, 21, 22) aus Polyethylen (PE), insbesondere aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP) besteht und/oder Bestandteile säuremodifizierter Polyolefine, wie Ionomere, EAA oder PP-MSA, enthält.

5. Blisterbodenteil (70) nach Anspruch 1, **dadurch gekennzeichnet, dass** das Polyolefin der Innenschicht (20, 21, 22) eine Coextrusionsschicht aus mehreren Schichten ist.

6. Blisterbodenteil (70) nach Anspruch 1, **dadurch gekennzeichnet, dass** die Sperrschicht (16) auf der dem Polyolefin zugewandten Seite mit einem Haftvermittler (18), insbesondere mit einem wasser- oder lösemittelbasierten Primer, oder mit einem polymeren Haftvermittler beschichtet ist.

7. Blisterbodenteil (70) nach Anspruch 1, **dadurch gekennzeichnet, dass** die Aussenschicht (12) ein mit der Aluminiumfolie (16) über eine Klebstoffschicht (14) verbundener Kunststofffilm (12) aus orientiertem Polyamid, orientiertem Polypropylen oder orientiertem Polyester ist.

8. Blisterpackung (80) zur Verpackung von gegen Feuchte, Sauerstoff und Säure empfindlichen Produkten, mit einem Blisterbodenteil (70) nach einem der Ansprüche 1 bis 7 und einer gegen die Innenseite des Blisterbodenteils (70) gesiegelten Deckfolie (30, 50) mit einer Sperrschicht (34, 54) als Barriere gegen Wasserdampf und Gase und einer auf einer ersten Seite der Sperrschicht (34, 54) angeordneten siegelfähigen Innenschicht (32, 52).

9. Verwendung einer Blisterpackung (80) nach Anspruch 8 zum Verpacken von pharmazeutischen Produkten, wie feuchteempfindlichen Tabletten und Pulvern.

## Claims

1. Blister base part (70) made of a laminate (10) comprising wells (72) formed from said laminate by cold-forming for the production of a blister pack (80) for packaging products that are sensitive to moisture, oxygen and acid, comprising an aluminium foil as a barrier layer (16) as a barrier against water vapour and gases, a plastics layer (12) arranged on a first side of the barrier layer (16) as the outer layer and a sealable inner layer (20, 21, 22) arranged on the second side of the barrier layer (16), an absorber material (24), which absorbs moisture, oxygen and acid and contains at least one oxide from the group of alkali and alkaline earth metals, being arranged on the second side of the barrier layer (16), **characterised in that** the inner layer (20, 21, 22) arranged on the second side of the barrier layer (16) contains polyolefin and consists of a plurality of layers, the outermost layer (22), which is the furthest away from the aluminium foil, and the innermost layer (21), which is closest to the aluminium foil, not containing any absorber material (24).

2. Blister base part (70) according to claim 1, **characterised in that** the absorber layer (24) is calcium oxide (CaO).

3. Blister base part (70) according to claim 2, **characterised in that** the layer containing the absorber material (24) contains from 0.5 to 50 wt.% CaO, preferably from 10 to 30 wt.% CaO.

4. Blister base part (70) according to claim 1, **characterised in that** the polyolefin of the inner layer (20, 21, 22) consists of polyethylene (PE), in particular of a high-density polyethylene (HDPE) and/or a low-density linear polyethylene (LLDPE) and/or a low-density polyethylene (LDPE) and/or of polypropylene (PP) and/or contains components of acid-modified polyolefins, such as ionomers, EAA or PP-MSA.

5. Blister base part (70) according to claim 1, **characterised in that** the polyolefin of the inner layer (20, 21, 22) is a co-extrusion layer consisting of a plurality of layers.

6. Blister base part (70) according to claim 1, **characterised in that** the barrier layer (16) is coated on the side facing the polyolefin with an adhesion promoter (18), in particular with a water-based or solvent-based primer, or is coated with a polymer adhesion promoter.

7. Blister base part (70) according to claim 1, **characterised in that** the outer layer (12) is a plastics film (12) made of oriented polyamide, oriented polypropylene or oriented polyester and bonded to the aluminium foil (16) by means of an adhesive layer (14).

8. Blister pack (80) for packaging products which are sensitive to moisture, oxygen and acid, comprising a blister base part (70) according to any of claims 1 to 7 and a lidding foil (30, 50) which is sealed against the inside of the blister base part (70) and comprises a barrier layer (34, 54) as a barrier against water vapour and gases and a sealable inner layer (32, 52) arranged on a first side of the barrier layer (34, 54).

9. Use of a blister pack (80) according to claim 8 for packaging pharmaceutical products, such as moisture-sensitive tablets and powders.

## Revendications

1. Partie de base de blister (70) constituée d'un stratifié (10) avec des godets (72) formés à partir de celui-ci par façonnage à froid pour la préparation d'un emballage blister (80) destiné à l'emballage de produits sensibles à l'humidité, l'oxygène et l'acide, avec une feuille d'aluminium comme couche barrière (16) comme barrière contre la vapeur d'eau et des gaz, une couche de matière plastique (12) disposée sur un premier côté de la couche barrière (16) comme couche extérieure et une couche intérieure (20, 21, 22) apte au scellement disposée sur le second côté de la couche barrière (16), un matériau d'absorbant (24) absorbant humidité, oxygène et acide contenant au moins un oxyde du groupe des métaux alcalins et alcalino-terreux étant disposé sur le second côté de la couche barrière (16),
**caractérisée en ce que**
la couche intérieure (20, 21, 22) disposée sur le second côté de la couche barrière (16) contient une polyoléfine et est constituée de plusieurs couches, la couche (22) la plus extérieure, la plus éloignée de la feuille d'aluminium et la couche (21) la plus intérieure, la plus proche de la feuille d'aluminium ne contenant pas de matériau d'absorbant (24).

2. Partie de base de blister (70) selon la revendication 1, **caractérisée en ce que** le matériau d'absorbant (24) est l'oxyde de calcium (CaO).

3. Partie de base de blister (70) selon la revendication 2, **caractérisée en ce que** la couche contenant le matériau d'absorbant (24) contient de 0,5 à 50 % en masse de CaO, de préférence de 10 à 30 % en masse de CaO.

4. Partie de base de blister (70) selon la revendication 1, **caractérisée en ce que** la polyoléfine de la couche intérieure (20, 21, 22) est constituée de polyéthylène (PE), en particulier d'un polyéthylène haute densité (HDPE) et/ou d'un polyéthylène linéaire faible densité (LLDPE) et/ou d'un polyéthylène faible densité (LDPE) et/ou de polypropylène (PP) et/ou contient des constituants de polyoléfines modifiées par un acide, comme des ionomères, EAA ou PP-MSA.

5. Partie de base de blister (70) selon la revendication 1, **caractérisée en ce que** la polyoléfine de la couche intérieure (20, 21, 22) est une couche de co-extrusion constituée de plusieurs couches.

6. Partie de base de blister (70) selon la revendication 1, **caractérisée en ce que** la couche barrière (16) est revêtue sur le côté orienté vers la polyoléfine d'un agent d'adhérence (18), en particulier d'un primaire à base d'eau ou de solvant, ou d'un agent d'adhérence polymère.

7. Partie de base de blister (70) selon la revendication 1, **caractérisée en ce que** la couche extérieure (12) est un film de matière plastique (12) lié à la feuille d'aluminium (16) par l'intermédiaire d'une couche d'adhésif (14) constitué de polyamide orienté, de polypropylène orienté ou de polyester orienté.

8. Emballage blister (80) destiné à l'emballage de produits sensibles à l'humidité, l'oxygène et l'acide, avec une partie de base de blister (70) selon l'une quelconque des revendications 1 à 7 et une feuille de couverture (30, 50) scellée contre le côté intérieur de la partie de base de blister (70) avec une couche barrière (34, 54) comme barrière contre la vapeur d'eau et des gaz et une couche intérieure (32, 52) apte au scellement disposée sur un premier côté de la couche barrière (34, 54).

9. Utilisation d'un emballage blister (80) selon la revendication 8 pour l'emballage de produits pharmaceutiques, comme des comprimés et des poudres sensibles à l'humidité.
